# EUROPEAN PATENT APPLICATION

(11) **EP 4 684 997 A1**
(43) Date of publication of application: **28.01.2026**
(21) Application number: 25187004.4
(22) Date of filing: 02.07.2025
(51) Int. Cl.: B60K 35/81

(54) **INFORMATION PROCESSING DEVICE, INFORMATION PROCESSING METHOD, AND COMPUTER-READABLE STORAGE MEDIUM**

(30) Priority: 24.07.2024 JP 2024118955
(71) Applicant: TOYOTA JIDOSHA KABUSHIKI KAISHA, Toyota-shi, Aichi-ken 471-8571 (JP)
(72) Inventor: TSUJINO, Miki, Toyota-shi, 471-8571 (JP)
(74) Representative: J A Kemp LLP

(57) **Abstract**

An information processing device has a control section that, on the basis of sensed information that a vehicle can sense, displays, on a display portion, a peripheral image showing a peripheral situation of the vehicle and a vehicle image modeling the vehicle of a time of viewing from a virtual viewpoint, and that changes an appearance of the vehicle image in accordance with a change in a traveling mode (sport, eco, comfort) relating to traveling performances of the vehicle.

## Description

### BACKGROUND

### Technical Field

The present disclosure relates to an information processing device, an information processing method, and a computer-readable storage medium.

### Related Art

Japanese Patent No. 7048398 (Patent Document 1) discloses a vehicle control device that can carry out automatic driving that gives a vehicle occupant a sense of security.

In the technique of Patent Document 1, images representing the own vehicle and peripheral vehicles are displayed on a display portion. However, although images that model vehicles are displayed on the display portion in Patent Document 1, changes in the state and the traveling performances of the vehicle cannot be grasped from the appearances of the images.

### SUMMARY

An object of the present disclosure is to provide an information processing device, an information processing method, and a computer-readable storage medium that depict the state of a vehicle and by which a vehicle occupant can visually grasp the state of the vehicle.

An information processing device relating to a first aspect has a control section that, on the basis of sensed information that a vehicle can sense, displays, on a display portion, a peripheral image showing a peripheral situation of the vehicle and a vehicle image modeling the vehicle of a time of viewing from a virtual viewpoint, and that changes an appearance of the vehicle image in accordance with a change in a traveling mode relating to traveling performances of the vehicle.

In the information processing device relating to the first aspect, the change in the traveling mode can be displayed visually so as to have an appearance that is such that the vehicle occupant easily understands the change.

In an information processing device relating to a second aspect, in the information processing device relating to the second aspect, the control section displays the vehicle image that models a vehicle form that differs in accordance with the traveling mode after changing. In accordance with the information processing device relating to the second aspect, the vehicle occupant can be made to intuitively understand the traveling mode by the display of the vehicle form.

In an information processing device relating to a third aspect, in the information processing device relating to the third aspect, the control section changes an appearance of the peripheral image of a periphery of the vehicle image in accordance with a vehicle form of the vehicle image or a vehicle state. In accordance with the information processing device relating to the third aspect, the vehicle occupant can be made to quickly and intuitively understand the change in the vehicle form or vehicle state corresponding to the traveling mode.

In an information processing device relating to a fourth aspect, in the information processing device relating to the fourth aspect, the control section displays a steering wheel image that models a steering wheel of an appearance corresponding to the traveling mode after changing. In accordance with the information processing device relating to the fourth aspect, the vehicle occupant can be made to intuitively understand the traveling mode by the steering wheel image.

In an information processing device relating to a fifth aspect, in the information processing device relating to the fifth aspect, an acquiring section acquires mode information defined in a miniature model that is placed at a predetermined position of the vehicle, and the control section changes to a traveling mode corresponding to the acquired mode information. In accordance with the information processing device relating to the fifth aspect, it is possible to change the traveling mode by using a miniature model that is placed in the vehicle.

In accordance with the technique of the present disclosure, the state of a vehicle is depicted, and a vehicle occupant can intuitively understand the state of the vehicle.

### BRIEF DESCRIPTION OF DRAWINGS

Fig. 1 is a block drawing illustrating the schematic structure of a vehicle.
Fig. 2 is a schematic drawing in which the front portion of a vehicle cabin interior of the vehicle is seen from a vehicle rear side.
Fig. 3 is an explanatory drawing for explaining the display region of a meter display as display region V of a first display portion.
Fig. 4 is a block drawing illustrating the schematic structure of an information processing device.
Fig. 5 is a drawing illustrating vehicle images corresponding to vehicle forms per traveling mode.
Fig. 6 is a drawing illustrating functional structures of the information processing device.
Fig 7 is a drawing illustrating examples of the vehicle images of the vehicle that are displayed in region X.
Fig. 8 is a flowchart illustrating the flow of specifying processing executed by the information processing device.
Fig. 9 is an example of display of a peripheral image showing a change in the vehicle state.
Fig. 10 is a drawing illustrating examples of a steering wheel image of the vehicle that is displayed in region X.
Fig. 11 is a drawing illustrating an example of an aspect of placing a miniature model.

### DETAILED DESCRIPTION

A vehicle 10 relating to present embodiments is described hereinafter.

### [First Embodiment]

First, a first embodiment of the vehicle 10 relating to the present embodiments is described.

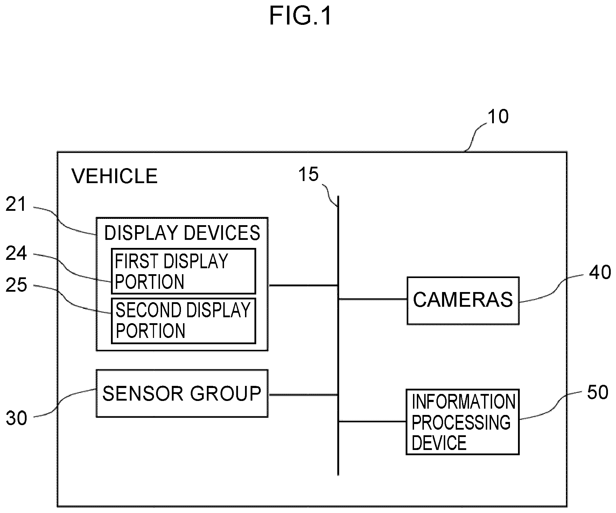

Fig. 1 is a block drawing illustrating the schematic structure of the vehicle 10. As illustrated in Fig. 1, the vehicle 10 has display devices 21, a sensor group 30, cameras 40, and an information processing device 50. The display devices 21, the sensor group 30, the cameras 40 and the information processing device 50 are respectively connected via an external bus (communication bus) 15.

The display devices 21 display proposals of operations relating to functions of the vehicle 10, and images relating to explanations of these functions, and the like. In the present embodiment, a first display portion 24 and a second display portion 25 are provided as the display devices 21. The first display portion 24 is an example of the "display portion" of the present disclosure. Note that details of the first display portion 24 and the second display portion 25 are described later.

The sensor group 30 includes sensors for sensing the state and the peripheral situation of the vehicle 10 such as, for example, 3D-LiDAR, millimeter wave sensors, infrared sensors, the turn signal sensors, the accelerator position sensor, the shift position sensor, luminance sensors, the vehicle speed sensor, steering angle sensors, angular velocity sensors, GPS (Global Positioning System) sensors, gyro sensors and acceleration sensors. The sensor group 30 outputs the results of sensing of the respective sensors to the information processing device 50.

The cameras 40 are imaging devices that capture images by using imaging elements such as CCD (Charge Coupled Device) image sensors or CMOS (Complementary Metal Oxide Semiconductor) image sensors. The cameras 40 are provided at the front, the rear, the left side surface and the right side surface of the vehicle 10, and capture images of the periphery of the vehicle 10. For example, the images captured by the cameras 40 provided at the front of the vehicle 10 are used in order to recognize another vehicle that is traveling in front of the vehicle, the inter-vehicle distance to the other vehicle, the lanes and traffic signals. The images captured by the cameras 40 are outputted to the information processing device 50. Note that the cameras 40 may be structured as the imaging devices of other applications such as the drive recorder and the ADS (Advance Driver Assistance System).

The information processing device 50 is, for example, an ECU (Electrical Control Unit) that carries out various types of control.

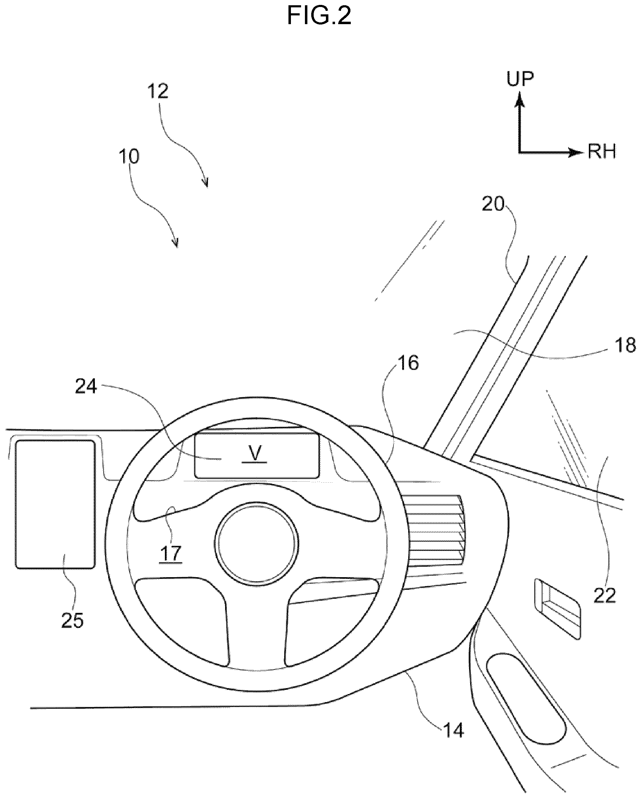

Fig. 2 is a schematic drawing in which the front portion of the interior of a vehicle cabin 12 of the vehicle 10 is seen from the vehicle rear side. Arrow UP shown in Fig. 2 indicates the upper side in the vehicle vertical direction, and arrow RH indicates the right side in the vehicle transverse direction. The vertical direction and the left-right direction in the following description mean the vertical of the vehicle vertical direction and the left and right of the vehicle transverse direction, respectively.

As illustrated in Fig. 2, an instrument panel 14 is provided at the front portion of the vehicle cabin 12 interior of the vehicle 10. The instrument panel 14 extends in the vehicle transverse direction, and a steering wheel 16 is provided at the vehicle right side of the instrument panel 14. Namely, the vehicle 10 is, as an example, a right-hand-drive vehicle in which the steering wheel 16 is provided at the right side, and the driver's seat is provided at the vehicle right side. Note that the present disclosure is not limited to this, and the vehicle 10 may be a left-hand-drive vehicle in which the driver's seat is provided at the vehicle left side.

A windshield glass 18 is provided at the front end portion of the instrument panel 14. The windshield glass 18 extends in the vehicle vertical direction and the vehicle transverse direction, and separates the interior of the vehicle cabin 12 and the exterior of the vehicle cabin 12.

A front pillar 20 at the vehicle right side is fixed to the vehicle right side end portion of the windshield glass 18. The front pillar 20 extends in the vehicle vertical direction, and the windshield glass 18 is fixed to the vehicle transverse direction inner side end portion of this front pillar 20. Further, the front end portion of a front side glass 22 is fixed to the vehicle transverse direction outer side end portion of the front pillar 20. Note that the vehicle left side end portion of the windshield glass 18 is fixed to an unillustrated front pillar that is at the vehicle left side.

Here, the first display portion 24 that has a display region V for images is provided at the instrument panel 14. The first display portion 24 is structured at the vehicle right side of the instrument panel 14 by a meter display that is provided at the vehicle front side of the driver's seat. The first display portion 24 is connected to various meter instruments installed in the vehicle 10, and is provided at a position that is within the field of view in the state in which the sightline of the driver is directed toward the vehicle front side.

The second display portion 25 is provided at the instrument panel 14. The second display portion 25 is structured by a center display disposed at the central portion in the vehicle transverse direction of the instrument panel 14.

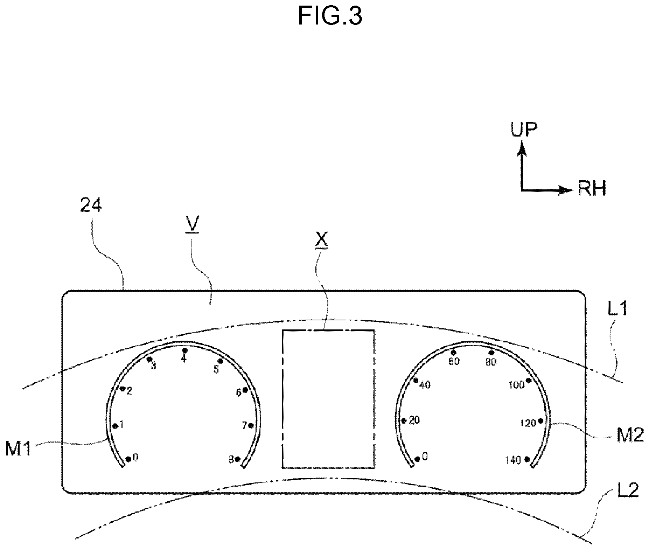

Fig. 3 is an explanatory drawing for explaining the display region of the meter display as the display region V of the first display portion 24.

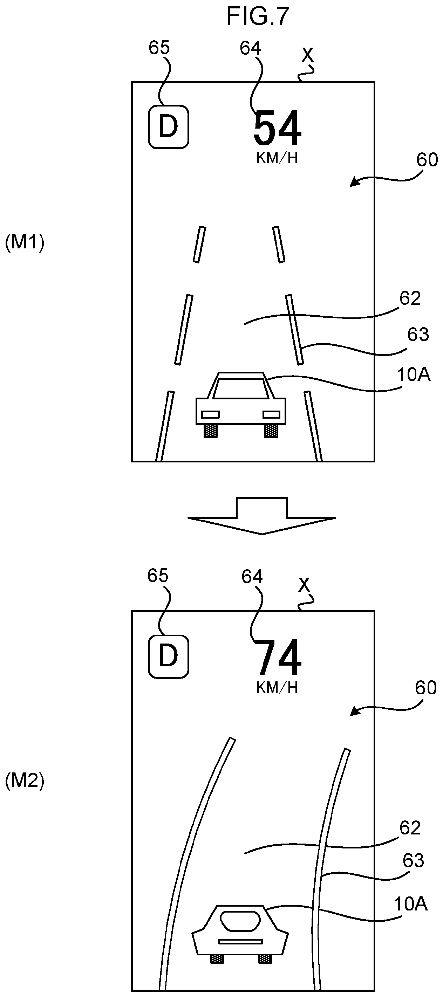

The display region V of the first display portion 24 is illustrated in Fig. 3. In the present embodiment, a vehicle image 10A (see Fig. 7 and the like) that is an image representing the vehicle 10, and peripheral images that are images showing the situation at the periphery of the vehicle 10, are displayed in display region X that is a partial region of the display region V. Note that specific examples of these images are described later.

The display region X is a region that the driver who is seated in the driver's seat can see through opening portion 17 (see Fig. 2) of the steering wheel 16. Specifically, as illustrated in Fig. 3, the center of the region that the driver can see from between an upper edge ridgeline L1 and a lower edge ridgeline L2 of the opening portion 17 is the display region X. Meter displays M1, M2 showing meters of measuring instruments of the vehicle 10 are displayed in the display region V at the left and the right of the display region X.

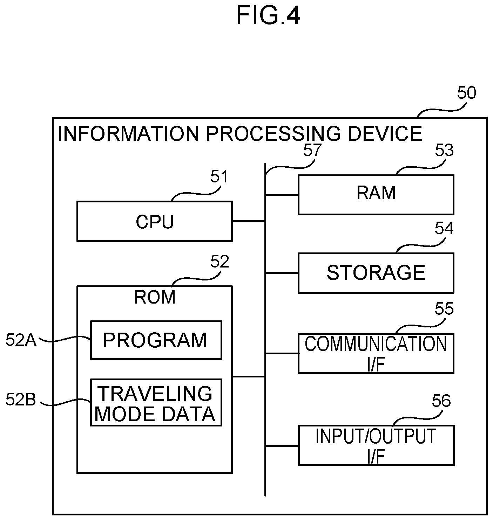

Fig. 4 is a block drawing illustrating the schematic structure of the information processing device 50. The information processing device 50 is an example of the "computer" of the present disclosure.

As illustrated in Fig. 4, the information processing device 50 is structured to include a CPU (Central Processing Unit) 51, a ROM (Read Only Memory) 52, a RAM (Random Access Memory) 53, a storage 54, a communication I/F (Inter Face) 55, and an input/output IF 56. The CPU 51, the ROM 52, the RAM 53, the storage 54, the communication I/F 55 and the input/output I/F 56 are connected so as to be able to communicate with one another via internal bus 57.

The CPU 51 is a central computing processing unit, and executes various programs and controls respective sections. Namely, the CPU 51 reads-out programs from the ROM 52 and executes the programs by using the RAM 53 as a workspace.

The ROM 52 stores various programs and various data. The RAM 53 temporarily stores programs and data as a workspace.

The storage 54 is a NAND memory structured by an eMMC (embedded Multi Media Card) or a UFS (Universal Flash Storage) or the like. The storage 54 and the CPU 51 are connected by an eMMC or a UFS interface.

Respective parts of the information processing device 50 such as the ROM 52 and the storage 54 are preferably tamperproof media such as HSMs (Hardware Security Modules).

The communication I/F 55 is an interface for connection with other ECUs. Communication standards in accordance with Ethernet^{®} are used at this interface.

The input/output I/F 56 is an interface for communication with onboard devices installed in the vehicle 10 such as the display devices 21, the sensor group 30 and the cameras 40.

Here, a program 52A and traveling mode data 52B are stored in the ROM 52.

The program 52A is a program for causing the CPU 51 to execute various processings. At the time of executing this program 52A, the information processing device 50 executes processings that are based on this program 52A by using the structures illustrated in Fig. 4.

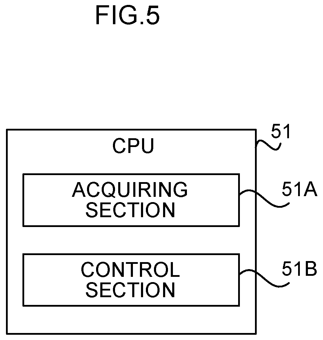

The traveling mode data 52B is data of vehicle images of vehicle forms corresponding to traveling modes relating to traveling performances of the vehicle 10. A vehicle image of a different vehicle form is stored for each traveling mode. Fig. 5 is a drawing illustrating vehicle images corresponding to vehicle forms per traveling mode. The vehicle image 10A is a 2D or 3D illustrative image generated as illustrative data on the basis of an illustrative design that models the vehicle form of a traveling mode of the vehicle 10. The traveling modes are, for example, a normal mode, a sports mode and an eco mode. The normal mode differs from the sports mode and the eco mode that are described later, and is a mode in a case in which the vehicle 10 is traveling on roads such as those of a usual urban area. The sports mode is a mode in a case in which the vehicle 10 is traveling on a road such as a winding road, and control relating to steering operations and speed fluctuations such as acceleration/deceleration is carried out more so than in the normal mode. The eco mode is a mode in a case in which the vehicle 10 is traveling so as to suppress fuel consumption (including electricity consumption) thereof, and control of the steering operations and acceleration/deceleration is carried out so as to keep the fuel consumption low. (A1) is the vehicle image for the normal mode. In the normal mode, an image representing an SUV-type vehicle for example as the default vehicle form is displayed as the vehicle image. When the traveling mode is changed, a vehicle form that differs from the default vehicle form is displayed. (A2) is the vehicle image for the sports mode. When the vehicle 10 enters into the sports mode, a vehicle image representing a sports car is displayed. (A3) is the vehicle image for the eco mode. When the vehicle 10 enters into the eco mode, a vehicle image representing an eco car is displayed.

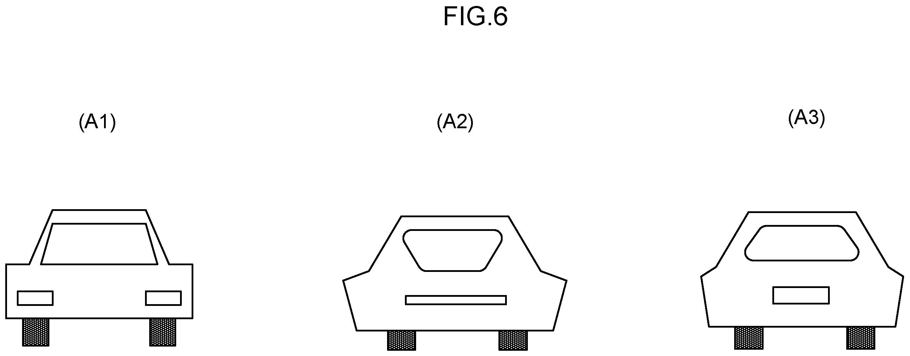

As illustrated in Fig. 6, the CPU 51 of the information processing device 50 has an acquiring section 51A and a control section 51B as the functional structures thereof. These functional structures are realized by the CPU 51 reading-out and executing the program 52A stored in the ROM 52. The control section 51B is an example of the "control section" of the present disclosure.

The acquiring section 51A acquires various information. For example, the acquiring section 51A acquires, as the various information, sensed information that can be sensed by the vehicle 10. The sensed information includes the results of sensing by the respective sensors structuring the sensor group 30, images captured by the cameras 40, and the like.

The control section 51B carries out display control relating to display by the display devices 21. For example, as this display control, on the basis of the sensed information acquired by the acquiring section 51A, the control section 51B displays on the first display portion 24 the vehicle image 10A and peripheral images of the periphery of a time of viewing from a virtual viewpoint. This virtual viewpoint is set in a three-dimensional virtual space whose origin is the position of the vehicle image 10A, and is defined by the viewpoint coordinates and the viewpoint angle (orientation) in the virtual space.

Further, in a case in which the vehicle occupant acquires an instruction or a change relating to the traveling mode for example, the acquiring section 51A refers to the traveling mode data 52B and specifies the traveling mode of the vehicle 10. Then, by causing the specified traveling mode, which corresponds to the vehicle category, to be reflected in the traveling mode of the vehicle, the acquiring section 51A activates the traveling mode.

Fig. 7 is a drawing illustrating examples of the vehicle image 10A of the vehicle 10 that is displayed in region X. As illustrated in Fig. 7, the vehicle image 10A that represents the vehicle 10 and peripheral images showing the peripheral situation are displayed. (M1) is an example of display of the vehicle image 10A in the default traveling mode, and (M2) is an example of display of the vehicle image 10A in a case in which the traveling mode is changed and made to be the sport mode. In (M1), the vehicle image 10A that models the vehicle form of a vehicle corresponding to the default is displayed. In (M2), the traveling mode has been changed, and the vehicle image 10A that models the vehicle form of a vehicle corresponding to a sports car is displayed. Further, as the peripheral images showing the peripheral situation, a lane image 62 showing the traveling lane of the vehicle 10, and a white line image 63 showing the white lines that demarcate the traveling lane, are displayed in region X. The white line image 63 in (M1) shows the boundary lines of the vehicle lane which are white, broken lines set on a usual road in an urban area. The white line image 63 in (M2) shows the boundary lines of the vehicle lane which are white, solid lines that are curved lines set on a winding road. Further, an image 64 showing vehicle speed information of the vehicle 10 and an image 65 showing the shift position of the vehicle 10 are displayed above the lane image 62.

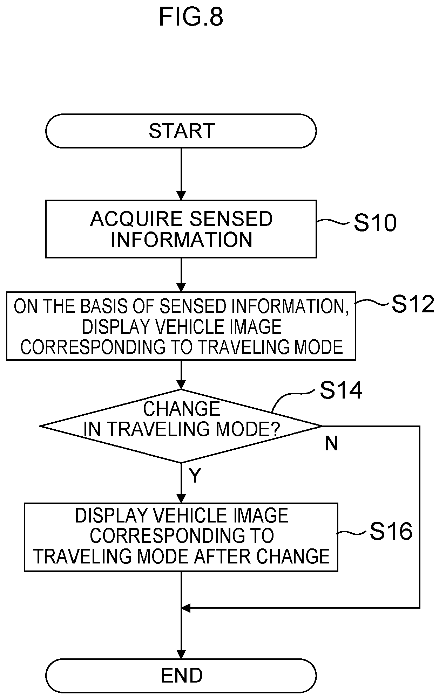

Fig. 8 is a flowchart illustrating the flow of specifying processing that is executed by the information processing device 50. The specifying processing is carried out by the CPU 51 reading-out the program 52A from the ROM 52, and expanding and executing the program 52A in the RAM 53. As an example, the specifying processing is repeated automatically each time a given time period elapses.

In step S10, the CPU 51 acquires sensed information that the vehicle 10 can sense. Then, the CPU 51 advances to step S12.

In step S12, on the basis of the sensed information acquired in step S10, the CPU 51 displays the vehicle image 10A corresponding to the traveling mode on the first display portion 24. Specifically, the CPU 51 acquires the illustrative design corresponding to the traveling mode of the vehicle 10 from the traveling mode data 52B, and displays the generated vehicle image 10A on the first display portion 24. At this time, the CPU 51 displays the vehicle image 10A on a road image at a viewpoint seen from the aforementioned virtual viewpoint such that the vehicle 10 is disposed so as to correspond to the current place of the vehicle 10 specified from the sensed information. Then, the CPU 51 advances onto step S14.

In step S14, the CPU 51 judges whether or not a change to the traveling mode has been made. If it is judged that the traveling mode has been changed, the CPU 51 moves on to step S16. If it is judged that the traveling mode has not been changed, the CPU 51 ends processing.

In step S16, the CPU 51 displays, on the first display portion 24, the vehicle image 10A corresponding to the traveling mode after the change. Specifically, the CPU 51 acquires the illustrative design of the vehicle form from the traveling mode data 52B, and displays the generated vehicle image 10A on the first display portion 24. Further, at this time, the CPU 51 changes the appearances of the peripheral images of the periphery of the vehicle image in accordance with the vehicle form of the vehicle image 10A or the vehicle state. For example, as illustrated in (M2) of Fig. 7, the change to a wider vehicle lane may be expressed by a change in the white line image 63. The change in the appearances of the peripheral images is not limited to this, and the color or the landscape of the background may be changed. Further, an icon expressing the traveling mode may be used as a peripheral image. Considering the vehicle form of the sports mode, an arrow icon in the advancing direction showing that it is easy to accelerate is displayed as a peripheral image for example. Further, considering the vehicle form of the eco mode, an icon of an eco mark is displayed as a peripheral image for example. Moreover, an icon that reflects an operation of the traveling mode may be displayed as a peripheral image. For example, in the sports mode, an icon showing a barometer of the extent of the steering operation at that time may be displayed as a peripheral image. Further, in the eco mode, a numerical value of the extent of the fuel consumption may be displayed as a peripheral image.

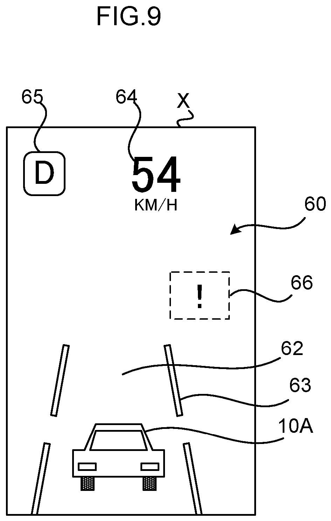

Further, a peripheral image expressing a change in the vehicle state is displayed as an aspect of the peripheral image. Fig. 9 is an example of display of a peripheral image expressing a change in the vehicle state. For example, in a case in which a manual mode that allows virtual manual operation is selected as the traveling mode of an electric vehicle, if the clutch is operated incorrectly and the engine stalls, an engine stall image 66 that is an exclamation point "!" expressing that the engine has stalled is displayed as a peripheral image. Due thereto, the vehicle occupant can visually understand quickly the change in the state of or the incident of the vehicle 10 that is the occurrence of engine stalling.

As described above, in the information processing device 50, on the basis of the sensed information, the CPU 51 displays the vehicle image 10A corresponding to the traveling mode on the first display portion 24. Further, in accordance with a change in the traveling mode of the vehicle 10, the CPU 51 acquires an illustrative design of the vehicle form corresponding to the traveling mode after the change, and displays the generated vehicle image 10A on the first display portion 24. Due thereto, at the information processing device 50, features derived from the external appearance of a user U1 are reflected in the color of a pedestrian image 78.

### [Second Embodiment]

A second embodiment of the vehicle 10 relating to the present embodiment is described next while omitting or simplifying portions redundant with the above-described embodiment.

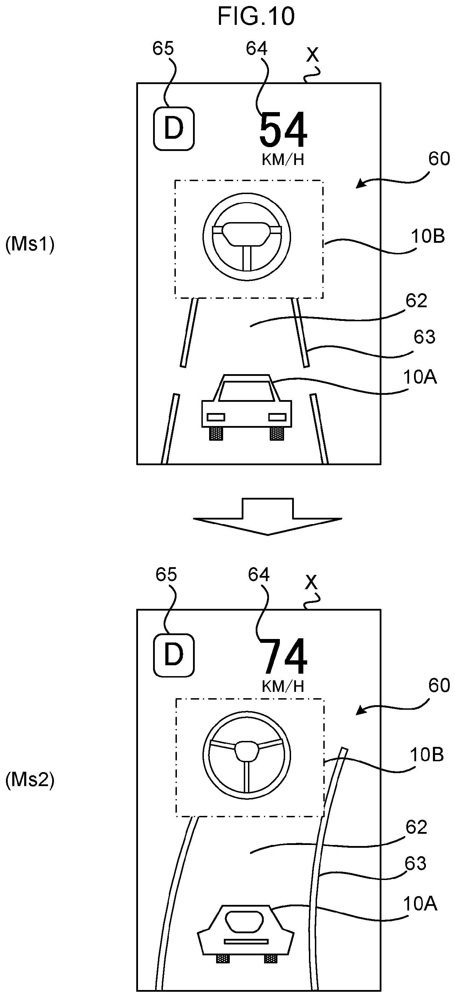

In the second embodiment, a steering wheel corresponding to the traveling mode is displayed in the display region X. Fig. 10 is a drawing illustrating examples of a steering wheel image 10B of the vehicle 10 that is displayed in region X. As illustrated in Fig. 10, the steering wheel image 10B that models a steering wheel is displayed together with the vehicle image 10A. (Ms1) illustrates the steering wheel image 10B corresponding to the default traveling mode, and (Ms2) illustrates the steering wheel image 10B corresponding to the sports mode. The steering wheel images 10B of forms that differ respectively in accordance with the traveling mode are stored in advance in the traveling mode data 52B. The steering wheel image 10B that is of a design reflecting the operational feel in a traveling mode is considered here. For example, in a case of the sports mode, the appearance of the steering wheel image 10B is made to be the steering wheel image 10B that has a clean design. When the vehicle 10 is set in the sports mode, for example, the suspension becomes tighter, the steering gear ratio changes, the steering force changes and the like, and these are reflected in the driving operations. Due thereto, the vehicle response with respect to operations becomes prompt. Therefore, the steering wheel image 10B is displayed as an icon of a steering wheel of a cleaner design that matches the operational feel. In this way, by using the steering wheel image 10B that is of a design reflecting the operational feel of the traveling mode, the vehicle occupant can intuitively grasp the traveling mode and the operational feel of the steering operations. In particular, even in cases in which no vehicle operation is being carried out such as while the vehicle is stopped, the current traveling mode can be understood instinctively. Note that the steering wheel image 10B also is included as an example of an aspect of the vehicle image of the present disclosure.

### [Third Embodiment]

A third embodiment of the vehicle 10 relating to the present embodiment is described next while omitting or simplifying portions redundant with the above-described embodiments.

In the third embodiment, the control section 51B acquires mode information defined in a miniature model that is placed at a predetermined position of the vehicle 10, and changes to the traveling mode corresponding to the acquired mode information. Miniature models corresponding to vehicle forms, and mode information defined in the miniature models, are stored in the traveling mode data 52B.

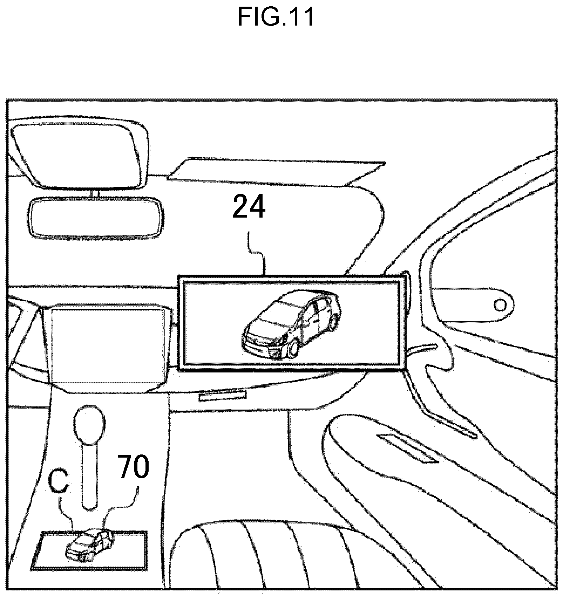

Fig. 11 is a drawing illustrating an example of an aspect of placing a miniature model. As illustrated in Fig. 11, for example, a miniature model 70 that models the vehicle 10 is placed on center console C of the vehicle that is the traveling subject. In a case in which the miniature model 70 is placed, the vehicle image 10A that the miniature model 70 is modeling can be outputted to the first display portion 24 in accordance with ID information outputted by an ID tag (not illustrated) embedded in that miniature model 70. The model information is, for example, driving characteristics such as the acceleration response characteristics, steering characteristics and acceleration characteristics that the vehicle form that is to be reproduced has. Further, a traveling mode and mode information that can be set only by the miniature model are defined in advance. By setting driving characteristics reflecting the operational feel that is particular to the type of vehicle corresponding to the miniature model 70, the vehicle occupant can experience a feeling of immersion as if driving a vehicle of the type of the miniature model.

The acquiring section 51A acquires mode information defined in the miniature model 70 that the vehicle occupant placed on the center console C, and changes to the traveling mode corresponding to the mode information. Due thereto, driving characteristics corresponding to the mode information are reflected in the control of the vehicle 10. Further, the control section 51B controls the vehicle 10 on the basis of the traveling mode that has been activated. Due thereto, because the driving characteristics of the traveling mode of the acquired miniature model 70 are reproduced at the vehicle 10, the vehicle occupant of the vehicle 10 can enjoy those driving characteristics. Further, by making it such that a miniature model is needed in order to set a specific traveling mode, the desire on the part of the vehicle occupant to collect the miniature models 70 can be encouraged. Further, for example, miniature models may be objects of collection that can be acquired when traveling by the vehicle 10 to specific places.

### (Other Points)

Although embodiments of the present disclosure have been described in detail with reference to the appended drawings, the technical scope of the present disclosure is not limited to these examples. It will be clear to persons having ordinary skill in the technical field of the present disclosure that various changed examples or modified examples can be conceived of within the scope of the technical concept put forth in the claims, and these changed examples and modified examples are, of course, to be understood as falling within the technical scope of the present disclosure.

Although the above embodiments describe, as examples, cases in which the appearance of the vehicle image 10A is changed and displayed in accordance with the traveling mode, the present disclosure is not limited to this. For example, the appearance of the vehicle image 10A may be changed not on the basis of the traveling mode, but in accordance with other information such as, for example, various types of information relating to the vehicle 10 itself, the peripheral situation, or the information of the miniature model. In particular, in a case of using information of a miniature model, vehicle image information is defined in advance in correspondence with the miniature model. It suffices for the display of the vehicle image 10A to be changed by referring to the definition of the vehicle image information due to the miniature model being placed. Further, the miniature model is not limited to vehicle image information, and peripheral images that are to be displayed under specific conditions may be defined therein in advance. For example, peripheral images that are to be displayed in correspondence with the miniature model in cases in which particular traveling states or peripheral situations arise may be defined in advance.

Further, the effects described in the above embodiments are explanatory or exemplary, and the effects of the present disclosure are not limited to those described in the above embodiments. Namely, in addition to the effects described in the above embodiments or instead of the effects described in the above embodiments, the technique relating to the present disclosure can exhibit other effects that will be clear to those having ordinary skill in the art of the technical field of the present disclosure from the description of the above embodiments.

The processings described in the above embodiments can also be realized by hardware circuits used exclusively therefor. In this case, the processings may be executed by one hardware circuit or plural hardware circuits.

In the above embodiments, the program 52A and the traveling mode data 52B are stored in the ROM 52. However, the present disclosure is not limited to this, and the storage 54 may store these data, or the respective data may be stored so as to be dispersed between the ROM 52 and the storage 54.

In the above embodiments, the first display portion 24 that is a meter display is used as an example of the "display portion" of the present disclosure, but examples of the "display portion" are not limited to a meter display. For example, examples of the "display portion" may be other displays such as a center display or a head-up display (HUD). Further, examples of the "display portion" may be combinations of plural displays such as a meter display and a center display.

In the above embodiments, the information processing device 50 executes the specifying processing illustrated in Fig. 8. However, the present disclosure is not limited to this, and the specifying processing may be executed by the information processing device 50 and other ECUs working in cooperation. For example, a case in which the effects of the specifying processing are displayed on the first display portion 24 and the second display portion 25 is assumed. In this case, among the display devices 21, the first display portion 24 may be controlled by the information processing device 50, and the second display portion 25 may be controlled by another ECU. In this case, the specifying processing may be executed by the information processing device 50 and plural ECUs among the other ECUs working in cooperation, or may be executed representatively by the information processing device 50 or any ECU among the other ECUs. Note that any of various types of processors other than a CPU may execute the processings that are executed due to the CPU 51 reading-in software (a program) in the above-described embodiments. Examples of processors in this case include PLDs (Programmable Logic Devices) whose circuit structure can be changed after production such as FPGAs (Field-Programmable Gate Arrays), and GPUs (Graphics Processing Units), and dedicated electrical circuits that are processors having circuit structures that are designed for the sole purpose of executing specific processings such as ASICs (Application Specific Integrated Circuits). Further, the above-described respective processings may be executed by one of these various types of processors, or may be executed by a combination of two or more of the same type or different types of processors (e.g., plural FPGAs, or a combination of a CPU and an FPGA). Further, the hardware structures of these various types of processors are, more specifically, electrical circuits that combine circuit elements such as semiconductor elements.

The above embodiments describe aspects in which the program is stored in advance (is installed) on a non-transitory, computer-readable recording medium. For example, the information processing program is stored in advance in the ROM 52 or the storage 54. However, the present disclosure is not limited to this, and the program may be provided in a form of being recorded on a non-transitory recording medium such as a CD-ROM (Compact Disk Read Only Memory), a DVD-ROM (Digital Versatile Disk Read Only Memory), or a USB (Universal Serial Bus) memory. Further, the information processing program may be in a form of being downloaded over a network from an external device.

The flow of the processings described in the above embodiment are examples, and unnecessary steps may be deleted therefrom, new steps may be added thereto, or the order of processings may be rearranged, within a scope that does not depart from the gist of the present disclosure.

## Claims

1. An information processing device comprising a control section that, on the basis of sensed information that a vehicle can sense, displays, on a display portion, a peripheral image showing a peripheral situation of the vehicle and a vehicle image modeling the vehicle of a time of viewing from a virtual viewpoint, and that changes an appearance of the vehicle image in accordance with a change in a traveling mode relating to traveling performances of the vehicle.

2. The information processing device of claim 1, wherein the control section displays the vehicle image that models a vehicle form that differs in accordance with the traveling mode after changing.

3. The information processing device of claim 2, wherein the control section changes an appearance of the peripheral image of a periphery of the vehicle image in accordance with a vehicle form of the vehicle image or a vehicle state.

4. The information processing device of claim 1, wherein the control section displays a steering wheel image that models a steering wheel of an appearance corresponding to the traveling mode after changing.

5. The information processing device of claim 2 further comprising an acquiring section that acquires mode information defined in a miniature model that is placed at a predetermined position of the vehicle, wherein the control section changes to a traveling mode corresponding to the acquired mode information.

6. An information processing method in which a computer executes processings of, on the basis of sensed information that a vehicle can sense, displaying, on a display portion, a peripheral image showing a peripheral situation of the vehicle and a vehicle image modeling the vehicle of a time of viewing from a virtual viewpoint, and changing an appearance of the vehicle image in accordance with a change in a traveling mode relating to traveling performances of the vehicle.

7. A computer-readable storage medium storing a program for causing a computer to execute processings of, on the basis of sensed information that a vehicle can sense, displaying, on a display portion, a peripheral image showing a peripheral situation of the vehicle and a vehicle image modeling the vehicle of a time of viewing from a virtual viewpoint, and changing an appearance of the vehicle image in accordance with a change in a traveling mode relating to traveling performances of the vehicle.
